# EUROPÄISCHE PATENTSCHRIFT

(11) **EP 1 938 054 B1**
(45) Veröffentlichungstag und Bekanntmachung des Hinweises auf die Patenterteilung: **17.11.2010**
(21) Anmeldenummer: 06793229.3
(22) Anmeldetag: 05.09.2006
(51) Int. Cl.: G01F 11/02, B01F 15/04, B01F 13/10, B29B 7/88, B29B 7/76, C08L 75/04, C09D 175/04

(54) **ZUSCHLAGSSTOFF-DOSIERVORRICHTUNG FUER POLYURETHAN-ANLAGE**
DEVICE FOR DOSING LOADING MATERIAL IN A POLYURETHANE PLANT
DISPOSITIF DE DOSAGE D'ADDITIFS CONÇU POUR UNE INSTALLATION DE POLYURETHANNE

(30) Priorität: 05.10.2005 DE 202005015569 U
(43) Veröffentlichungstag der Anmeldung: 02.07.2008
(73) Patentinhaber: KraussMaffei Technologies GmbH, 80997 München (DE)
(72) Erfinder: BRUNNER, Robert, 86156 Augsburg (DE); EHRLICHER, Stefan, 80997 München (DE)
(74) Vertreter: Zollner, Richard
(86) Internationale Anmeldenummer: PCT/EP2006/066018
(87) Internationale Veröffentlichungsnummer: WO 2007/039378

(56) Entgegenhaltungen:
- EP-A- 1 593 473
- EP-A2- 0 258 688
- EP-A2- 0 276 665
- WO-A-2004/105926
- DE-A1- 1 769 905
- DE-A1- 2 636 165
- DE-A1- 3 327 420
- DE-A1- 4 108 186
- UHLIG K: "Polyurethan-Taschenbuch" [Online] 2006, HANSER VERLAG , 3. AUFLAGE (2006) , XP002407111 ISBN: 3-446-40307-8 Gefunden im Internet: URL:http://www.kunststoffweb.de/bookshop/p dfs/47071lp.pdf> [gefunden am 2006-11-13] Seite 90 - Seite 110

## Beschreibung

Die vorliegende Erfindung betrifft eine Zuschlagsstoff-Dosiervorrichtung für eine Polyurethan-Anlage.

In Polyurethan-Anlagen werden herkömmlicherweise zwei reaktive Komponenten (beispielsweise Polyol und Isocyanat) in einem Mischkopf innig miteinander vermischt und dann in eine Form ausgetragen, in der die miteinander vermischten, reaktiven Komponente aushärtet. Bei einigen Anwendungen werden dem Mischkopf noch zusätzliche Zuschlagsstoffe zugeführt, die dem Gemisch der reaktiven Komponenten beigesetzt werden. Natürlich können die Zuschlagsstoffe auch bereits vor dem Mischkopf einer Komponente zugeführt werden.

Als betriebsinternes Beispiel für die Beigabe solcher Zuschlagsstoffe kann eine Farbdosierung genannt werden. Bei solchen Farbdosierungen werden beispielsweise der Austragsmenge zwei Prozent Farbe beigefügt.

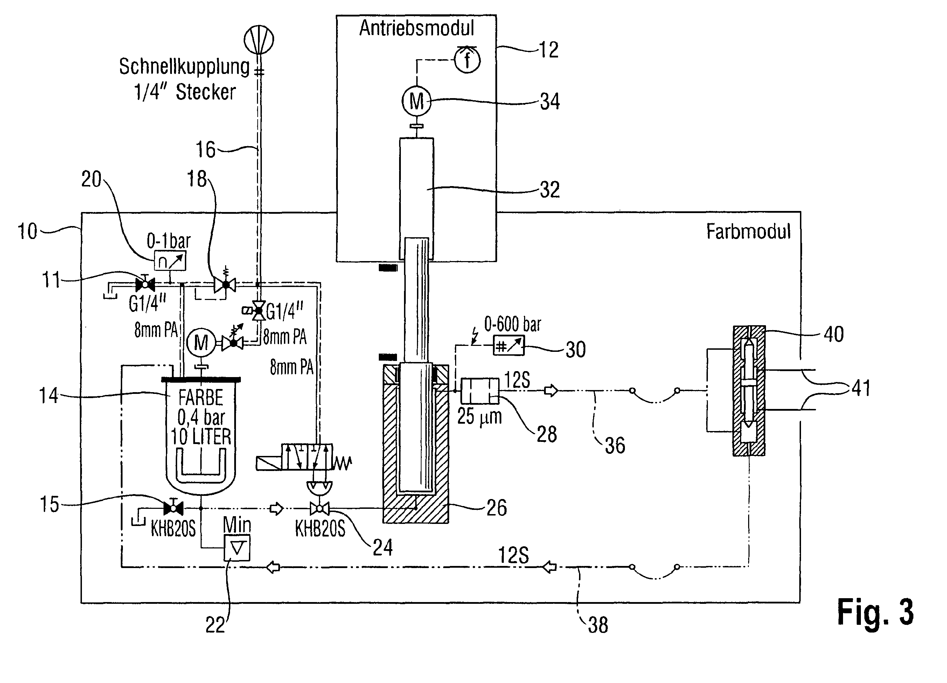

Für eine solche Zugabe von Zuschlagsstoffen, beispielsweise von Farbe, sind eigenständige Zusatzaggregate bekannt. Ein Beispiel eines solchen eigenständigen Zuschlagsaggregats ist den Figuren 4 und 5 in einer Fließzeichnung (Fig. 4) und einer perspektivischen Fotodarstellung (Fig. 5) zu entnehmen. Diese Beistellaggregate beinhalten in der Regel alle für die Zufuhr des Zuschlagsstoffes notwendigen Teile inkl. des Zugabe- bzw. Farbbehälters. So ist der Fig. 4 - ohne auf die Details näher eingehen zu wollen - zu entnehmen, dass dem Farbbehältnis 100 eine Druckluftversorgung zugeordnet ist, die über eine Druckluftleitung, die mit einer externen Druckluftquelle verbunden oder verbindbar ist, dem Behältnisinneren Druckluft zuführt, um dort auch bei einer kontinuierlichen Leerung des Behältnisses konstante Druckverhältnisse im Behälter gewährleisten und den Austrag sicherstellen zu können.

Betriebsintern bekannt ist es, das Behältnis 100 als doppelwandiges Behältnis aufzubauen, wobei der Raum zwischen den Doppelwänden über ein Temperiergerät 104 mit einem Temperierfluid versorgt wird, um so den Farbstoff auf einer gewünschten Temperatur zu halten.

Im Behältnis 100 ist überdies ein Rührwerk angeordnet, welches die Farbe kontinuierlich umrührt. Separat zum Behältnis ist eine Kolben-Zylinder-Dosiereinheit 106 angeordnet. Deren Zylinderraum steht mit dem Behältnisinneren in Strömungsverbindung oder ist in Strömungsverbindung bringbar. Der Kolben der Kolben-Zylinder-Dosiereinheit 106 wird mittels einer Antriebsvorrichtung 110 betätigt, die über die Antriebshydraulik 108 mit Hydraulikfluid versorgt wird. Beim Betrieb dieser Zusatzvorrichtung wird der Farbbehälter gefüllt und unter Druck gesetzt. Durch Betätigung der Kolben-Zylinder-Dosiereinheit - beispielsweise mit einem Betriebsdruck von 250 bar - kann einem Mischkopf die entsprechende Farbmenge zugeführt werden.

Wie man aus Fig. 5 sieht, ist dieses Zusatzaggregat mit einer autarken Hydraulik inkl. dem Steuerschrank fix auf einer Palette aufgebaut. Das Problem dieser Anlage besteht nun darin, dass bei Farbwechseln entweder diese Vorrichtung vollständig ausgetauscht werden muss oder die Farbe in dieser Anlage gewechselt werden muss. Bei letzterem ist es notwendig, den Farbbehälter zu öffnen, die Farbe zu entnehmen, das Behältnis zu säubern und sämtliche mit der Farbe in Verbindung kommende Bauteile zu spülen und säubern. Diese Vorgehensweise kann Stunden in Anspruch nehmen.

In der heutigen Zeit ist es jedoch immer mehr erforderlich, einen schnellen Farbwechsel vornehmen zu können. Dazu müsste man bei der vorbekannten Zusatzeinrichtung für jede Farbe mehrere Zusatzeinrichtungen zur Verfügung stellen.

Zum weiteren Stand der Technik wird auf die DE-OS 1 769 905 und die WO 2004/105926 hingewiesen. In der DE-OS 1 769 905 ist eine Einrichtung zum Einbringen von Beimischungen in Schmelzen synthetischer Polymerer beschrieben, wobei die Beimischungen in die Schmelze führende Leitung mittels zweier in Serie geschalteter Dosierpumpen eingebracht werden, von denen die an den Vorratsbehälter anschließende Pumpe unbeheizt und die andere Pumpe beheizt ist. Die WO 2004/105926 beschreibt eine Dosiervorrichtung für zwei unterschiedliche Fluid-Komponenten. Jeder Fluid-Komponente ist eine Kolbenpumpe zugeordnet, deren Kolbenschäfte über einen Halterahmen überstehen. Jede Pumpe kann über eine Antriebsplatte betrieben werden, wobei Mittel zum Verbinden der Kolbenenden mit der Antriebsplatte vorgesehen sind.

Aufgabe der vorliegenden Erfindung ist es, eine Lösung für dieses Problem anzugeben, um insbesondere auch bei einem oftmaligen Wechsel der Zugabestoffe keine großen Umbau- und Säuberungsaktionen vornehmen zu müssen.

Diese Aufgabe wird durch die im Anspruch 1 genannten Merkmale gelöst.

Ein Grundgedanke der vorliegenden Erfindung besteht darin, eine Zuschlagsstoff-Dosiervorrichtung zu schaffen, die eine austauschbare Kartusche enthält, wobei diese Kartusche selbst ohne Antrieb ausgebildet ist, jedoch ansonsten die wesentlichen Teile wie Behältnis, zumindest einen Teil der Verrohrung, die Kolben-Dosiervorrichtung etc. aufweist. An diese Kartusche kann ein Antriebsmodul für die Betätigung der Kolben-Dosiervorrichtung angebracht werden. Dieses Antriebsmodul ist möglicherweise auch mit der Aufnahmevorrichtung für die Kartusche gekoppelt oder koppelbar. Zudem besitzt die Kartusche die entsprechenden Leitungen und Einrichtungen für die Verbindung des Behältnisses mit einer Druckversorgungseinrichtung. Vorzugsweise sind solche Leitungen, die an externe Elemente anzuschließen sind mit einer Schnellkupplung ausgestattet, so dass die entsprechenden Verbindungen schnell herstellbar oder trennbar sind. Auch kann ein Strömungsverhältnis zwischen dem Behälter mit einer Austragsdüse hergestellt sein oder hergestellt werden.

Bei Verwendung einer solchen Dosiervorrichtung mit einer entsprechenden Kartusche ist der Zuschlagsstoff, beispielsweise die Farbe, bereits in dem Behältnis angeordnet. Die Kartusche wird dann beispielsweise in eine Kartuschenaufnahme eingesetzt und vorzugsweise mittels der Schnellkupplungen mit der Druckluft bzw. dem Mischkopf verbunden. Sodann wird das Antriebsmodul auf die Kolben-Dosiervorrichtung aufgesetzt oder mit dieser wirkverbunden. Diese Arbeiten können in einem relativ kurzen Zeitraum erledigt werden.

Nach dem Verbinden der Kartusche mit den externen Elementen und dem Aufsetzen des Antriebsmoduls ist die Anlage betriebsbereit. Sollte die Farbe gewechselt werden, so können die entsprechenden Verbindungen gelöst und die Kartusche weggenommen werden. Anschließend kann eine neue Kartusche (z.B. mit einer anderen Farbe) eingesetzt und auch diese neue Kartusche auf schnelle Art und Weise wieder mit den notwendigen Medien, Versorgungen oder Leitungen verbunden werden. Ein solcher Farbwechsel bzw. Zuschlagwechsel ist somit in kurzer Zeit zu realisieren. Auch wenn der Vorrat einer Kartusche aufgebraucht ist, kann diese Kartusche auf einfache Weise gegen eine neue Kartusche ersetzt werden.

Ein besonderer Vorteil der vorliegenden Erfindung ist darin zu sehen, dass die mit dem Zuschlagsstoff, beispielsweise mit der Farbe, in Verbindung kommenden Elemente vollständig entweder in der Kartusche integriert sind oder mit der Kartusche verbunden sind. In diesem Zusammenhang kann darauf hingewiesen werden, dass auch die Farbleitung zum Mischkopf bzw. zur Farbdüse für den Mischkopf noch der Kartusche zugeordnet wird und bei optimaler Konstruktion lediglich ein wenige Millimeter langer Kanal im Mischkopf selbst beim Auswechseln der Kartusche mit der bisherigen Farbe "verunreinigt" ist und evtl. gespült werden muss. Wahlweise kann auch das erste der in Folge hergestellten Produkte aufgrund der Verfärbung als Ausschussteil behandelt und entsorgt werden.

Das Antriebsmodul für die Kolben-Dosiervorrichtung kann als elektrisches Modul ausgestattet werden, so dass lediglich ein Anschluss an eine entsprechende Stromversorgung und Steuerung der gesamten Maschine oder Anlage notwendig ist. Überdies kann man die Behältnisse kostengünstig aufbauen, so dass sie leicht zu füllen und reinigen sind.

Die gesamte Dosieranlage weist kompakte Abmessungen auf. Bei einer günstigen Konstruktion kann mit nur einer Schnittstelle eine Versorgung sämtlicher Medien oder die Verbindung zu sämtlichen elektrischen Anschlüssen (z.B. über einen Stecker) hergestellt werden. Die Kartusche weist insofern den Behälter und die Kolben-Dosiervorrichtung auf. Überdies kann das Ansaugventil, die Zylinderentlüftung, ein Niveauschalter und ein einziger Stecker für alle Sensoren oder Aktuatoren vorgesehen sein. Für den Druckluftanschluss eignet sich in besonderer Weise eine Schnellkupplung, so dass die Druckluftverbindung innerhalb weniger Augenblicke hergestellt werden kann. Optional bietet sich das Vorsehen eines Rührwerkes im Behältnis an, welches ebenfalls über die Druckluft betreibbar sein könnte. Zusätzlich kann ein Temperaturfühler oder der Einsatz einer Heizpatrone im Behältnis vorgesehen sein.

Mit dieser Erfindung schafft man insbesondere beim Betriebe einer Polyurethananlage mit einer hohen Wechselfrequenz von Zuschlagsstoffen einen Kostenvorteil. Der gesamte Farbwechsel bei einer Anlage könnte innerhalb von wenigen Minuten erreicht werden. Sodann entfällt eine Umweltbelastung durch das Spülen der Dosiervorrichtung. Auch ist kein Reinigen des Farbbehälters nach dessen Zerlegung notwendig. Überdies ist auch ein thixotropes Material mit einer Folgeplatte verarbeitbar.

Nachfolgend wird die vorliegenden Erfindung anhand eines Beispiel und mit Bezug auf die beigefügten Zeichnungen näher beschrieben. Die Zeichnungen zeigen in:
- Fig. 1:: eine Kartusche einer erfindungsgemäßen Zuschlagsstoff- Dosiervorrichtung in schematischer Perspektivansicht,
- Fig. 2:: eine in einer Haltevorrichtung eingesetzte Kartusche ebenfalls in schematischer Perspektivansicht mit aufgesetztem Antrieb,
- Fig. 3:: ein Flussdiagramm einer erfindungsgemäßen Zuschlagsstoff- Dosiervorrichtung,
- Fig. 4:: ein Flussdiagramm einer Zuschlagsstoff-Dosiervorrichtung nach dem Stand der Technik,
- Fig. 5:: eine schematische Perspektivansicht einer Zuschlagsstoff- Dosiervorrichtung wie sie in Fig. 4 dargestellt ist.

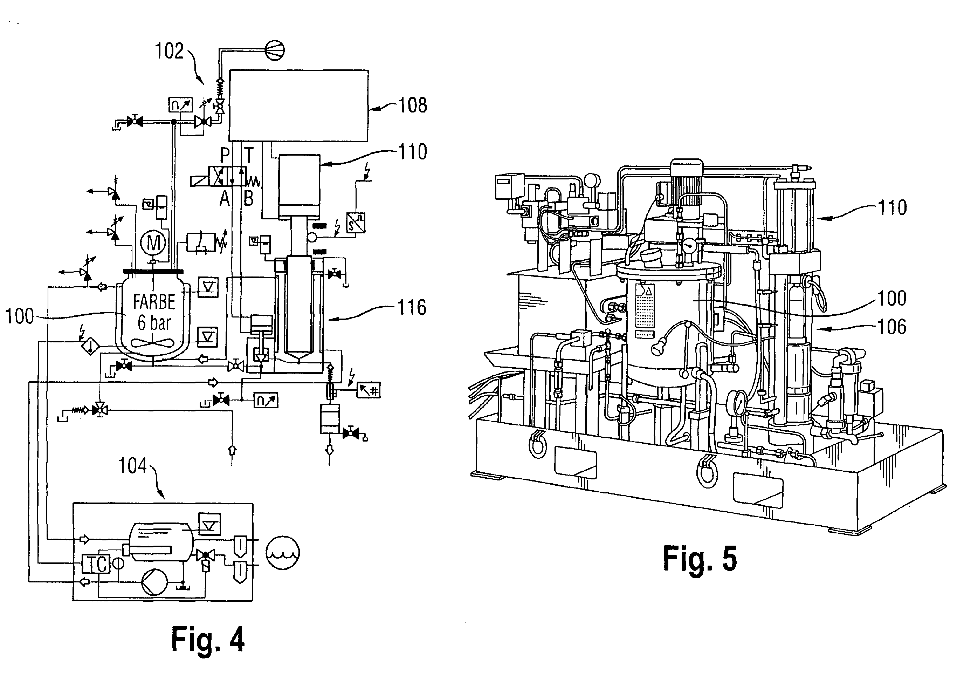

In Fig. 3 ist in Form eines Flussdiagramms eine erfindungsgemäße Zuschlagsstoff-Dosiervorrichtung dargestellt, wobei durch das Kästchen mit der Bezugsziffer 10 eine Kartusche bezeichnet ist und durch das Kästchen mit der Bezugsziffer 12 ein Antriebsmodul für diese Kartusche. Die Kartusche 10 umfasst ein Behältnis 14, welches mittels einer Schnellverbindung über eine Druckluftleitung 16, einen Druckregler 18 mit einer externen Druckmittelquelle koppelbar ist. Im Bereich der Druckmittelversorgung ist zudem ein Druckmesser 20 und ein Entlüftungshahn 11 vorgesehen. Die Druckluftleitung 16 besitzt eine Abzweigung, die zum Antrieb für das innerhalb des Behältnisses 14 angeordneten Rührwerk führt. Dieses Rührwerk ist somit mittels Druckluft antreibbar. Das Rührwerk dient zum Vermischen der Farbe im Behältnis 14.

Aus dem Behältnis 14, in dem die Farbe angeordnet ist, kann diese entnommen und über ein Befüllventil einer Dosierkolbeneinheit 26 zugeführt werden. Die Dosierkolbeneinheit 26, welche in der Kartusche 10 integriert ist, ist ohne Antriebsmodul 12 ausgestattet. Das Antriebsmodul 12 kann für den Betrieb auf die Kartusche 10 aufgesetzt werden. Wird der Kolben in der Dosierkolbeneinheit durch das Antriebsmodul betätigt, so kann die im Zylinder angesammelte Farbe mit einem Druck von beispielsweise 250 bar über einen Hochdruckfilter und einem Zulauf 36 zu einer Farbdüse 40 verbracht werden, von der sie bei einer bestimmten Betriebsstellung in einen nicht dargestellten Mischkopf eingespritzt wird.

In einer anderen Betriebsstellung kann die Farbe über die Rückführleitung 38 wieder zum Farbbehälter 14 zurückgeführt werden. Die Farbdüse ist in zumindest zwei Betriebsstellungen betreibbar, wobei diese Stellungen über die Hydraulikversorgung 41 erreicht werden.

Nicht dargestellt ist der Mischkopf, in den die Farbe mit der Farbdüse eingebracht und mit den übrigen reaktiven Komponenten vermischt wird.

Das separate Antriebsmodul umfasst einen elektrischen Motor, mit dem - evtl. unter Zwischenschaltung eines Getriebes - der Schaft des Kolbens nach unten und oben betätigt werden kann.

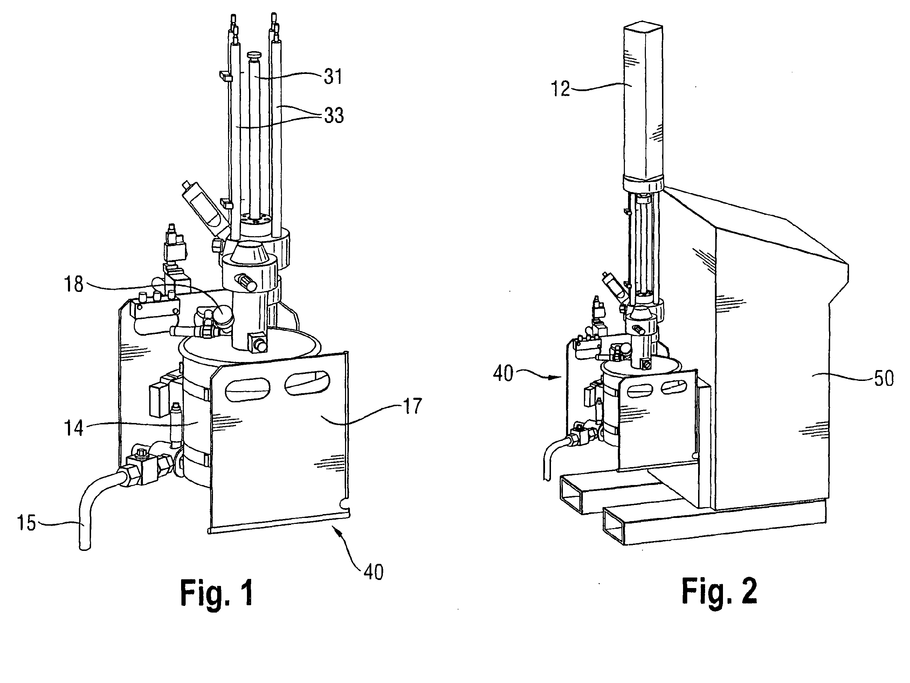

In den Figuren 1 und 2 ist zu erkennen, wie dieses - vorliegend elektrisch angetriebene-Antriebsmodul auf die Kartusche aufgesetzt wird. In Fig. 1, in der lediglich die Kartusche dargestellt ist, sind vier Stangen 33 vorgesehen, auf die das Antriebsmodul 12 verriegelbar aufsteckbar ist. Nach dem Aufstecken des Antriebsmoduls 12 auf die Stangen 33 kann der Schaft 31 des Kolbens mit dem Antriebsmodul verbunden werden. Durch den Betrieb des Antriebsmoduls kann der Kolben mittels der Kolbenstange vor und zurück verschoben werden, wodurch die Farbeinspritzung durch die Farbdüse 40 in den Mischkopf betrieben wird.

In Fig. 2 ist noch die Aufnahme der Kartusche in einem Ständer 50 dargestellt.

In der Kartusche selbst ist noch ein Niveauschalter vorgesehen, der meldet, wenn das Behältnis 14 bis zu einem gewissen Grad geleert ist. Sodann wird ein Signal erzeugt, welches ausgelesen werden kann.

Beim vorliegenden Ausführungsbeispiel nicht dargestellt, jedoch angeordnet sein können, ein Temperatursensor im Behältnis 14 sowie eine Heizpatrone zur Temperierung des Behältnisses. Dabei hat es sich als vorteilhaft herausgestellt, dass alle Anschlüsse, insbesondere die elektrischen Anschlüsse in Form eines einzigen Schalters vorgesehen sind. Auf diese Art und Weise ist die Kartusche relativ schnell und leicht ein- und ausbaubar.

Insgesamt bietet die vorliegende Erfindung eine schnelle Möglichkeit für einen Wechsel von verschiedenen Zuschlagsstoffen für eine Polyurethan-Anlage. Auch können damit die Kosten für die Bereitstellung verschiedener Farben oder anderer Zuschlagsstoffen gesenkt werden.

| **Bezugszeichenliste** | |
|---|---|
| 10 | Kartusche |
| 11 | Entlüftungshahn |
| 12 | Antriebsmodul |
| 14 | Behältnis |
| 15 | Ablasshahn |
| 16 | Druckluftleitung |
| 17 | Befestigungsblech |
| 18 | Druckregler für Behälter |
| 20 | Druckmesser |
| 22 | Niveau-Schalter |
| 24 | Befüllventil |
| 26 | Dossierkolbeneinheit |
| 28 | Hochdruckfilter |
| 30 | Druckschalter |
| 31 | Kolbenstange |
| 33 | Zug- und Halteelemente |
| 34 | Motor |
| 40 | Farbdüse für den Mischkopf |
| 41 | Hydraulikversorgung |
| 50 | Kartuschenhalterung |
| 100 | Behältnis nach dem Stand der Technik |
| 102 | Druckluftversorgung |
| 104 | Temperierung |
| 106 | Dosierkolben |
| 108 | Antriebshydraulik |
| 110 | Antriebseinheit |

## Patentansprüche

1. Zuschlagsstoff-Dosiervorrichtung für eine Polyurethan-Anlage umfassend
- eine austauschbare Kartusche (10) und ein mit der Kartusche (10) koppelbares Antriebsmodul (12), wobei die Kartusche (10) aufweist
-- ein Behältnis (14) für den Zugabestoff,
-- eine Einrichtung (16, 18, 20) zum Versorgen des Behältnisses (14) mit Druckluft, welche an eine Druckversorgungseinrichtung anschließbar ist, sowie
-- eine Kolbendosiervorrichtung (26), welche mit dem Behältnis (14) in Strömungsverbindung steht oder bringbar ist und mit einer Austragsdüse (40) verbunden oder verbindbar ist,
**dadurch gekennzeichnet,**
**dass** die Kolbendosiervorrichtung (26) ohne Antrieb und mit dem Antriebsmodul lösbar koppelbar ist, und dass das Antriebsmodul zum Betrieb der Kolbendosiervorrichtung verwendet wird.

2. Zuschlagsstoff-Dosiervorrichtung nach Anspruch 1,
**dadurch gekennzeichnet,**
**dass** das Antriebsmodul elektrisch oder hydraulisch angetrieben ist.

3. Zuschlagsstoff-Dosiervorrichtung nach Anspruch 2,
**dadurch gekennzeichnet,**
**dass** bei einem elektrischen Antrieb ein Drehmotor vorgesehen ist und der Drehmotor mit einem Getriebe derart gekoppelt ist, dass die Drehbewegung in eine Linearbewegung für den Kolben der Kolbendosiervorrichtung umgewandelt wird.

4. Zuschlagsstoff-Dosiervorrichtung nach einem der Ansprüche 1 bis 3,
**dadurch gekennzeichnet,**
**dass** das Behältnis (14) als doppelwandiges Temperierbehältnis ausgebildet und an eine Temperiereinrichtung anschließbar ist.

5. Zuschlagsstoff-Dosiervorrichtung nach einem der Ansprüche 1 bis 3,
**dadurch gekennzeichnet,**
**dass** das Behältnis (14) als doppelwandiges Temperierbehältnis ausgebildet ist und eine Temperiereinheit in der Kartusche aufgenommen und mit dem Behältnis zu dessen Temperierung verbunden ist.

6. Zuschlagsstoff-Dosiervorrichtung nach einem der Ansprüche 1 bis 3,
**dadurch gekennzeichnet,**
**dass** eine Heizpatrone als Heizeinrichtung in das Behältnis (14) einsetzbar oder eingesetzt ist.

7. Zuschlagsstoff-Dosiervorrichtung nach einem der Ansprüche 1 bis 6,
**dadurch gekennzeichnet,**
**dass** ein Temperaturfühler im Behältnis (14) integriert oder einsetzbar ist.

8. Zuschlagsstoff-Dosiervorrichtung nach einem der vorhergehenden Ansprüche,
**dadurch gekennzeichnet,**
**dass** eine Kartuschenaufnahme mit einer Halteeinrichtung (17) zur Aufnahme der Kartusche (10) vorgesehen ist.

9. Zuschlagsstoff-Dosiervorrichtung nach einem der vorhergehenden Ansprüche,
**dadurch gekennzeichnet,**
**dass** in dem Behältnis (14) ein Rührwerk vorgesehen ist, welches mit einem pneumatischen Antrieb betreibbar ist, wobei der pneumatische Antrieb mit der Druckversorgungseinrichtung verbunden oder verbindbar ist.

10. Zuschlagsstoff-Dosiervorrichtung nach einem der vorhergehenden Ansprüche,
**dadurch gekennzeichnet,**
**dass** für den Anschluss aller elektrischen Systeme, wie Sensoren, der Kartusche (10) ein einziger Stecker vorgesehen ist.

11. Zuschlagsstoff-Dosiervorrichtung nach einem der vorhergehenden Ansprüche,
**dadurch gekennzeichnet,**
**dass** zumindest ein Niveauschalter (22) vorgesehen ist.

12. Zuschlagsstoff-Dosiervorrichtung nach einem der vorhergehenden Ansprüche,
**dadurch gekennzeichnet,**
**dass** die Medienleitungen Schnellkupplungen aufweisen, mittels denen externe Vorrichtungen mit der Kartusche (10) verbindbar sind.

## Claims

1. Dosing device for additives for a polyurethane plant comprising
- an exchangeable cartridge (10) and a drive module (12) which is able to be coupled with the cartridge (10), wherein the cartridge (10) has
-- a receptacle (14) for the additive,
-- an arrangement (16, 18, 20) for supplying the receptacle (14) with compressed air, which is able to be connected to a pressure supply arrangement, and
-- a piston dosing device (26), which is or is able to be brought in flow connection with the receptacle (14) and is connected or connectable with a discharge nozzle (40),
**characterized in that**
the piston dosing device (26) is without a drive and is able to be detachably coupled with the drive module, and that the drive module is used to operate the piston dosing device.

2. Dosing device for additives according to Claim 1,
**characterized in that**
the drive module is driven electrically or hydraulically.

3. Dosing device for additives according to Claim 2,
**characterized in that**
a rotary motor is provided in the case of an electric drive, and the rotary motor is coupled with a gear such that the rotary movement is converted into a linear movement for the piston of the piston dosing device.

4. Dosing device for additives according to one of Claims 1 to 3,
**characterized in that**
the receptacle (14) is constructed as a double-walled temperature control receptacle and is able to be connected to a temperature control arrangement.

5. Dosing device for additives according to one of Claims 1 to 3,
**characterized in that**
the receptacle (14) is constructed as a double-walled temperature control receptacle and a temperature control unit is held in the cartridge and is connected with the receptacle for its temperature control.

6. Dosing device for additives according to one of Claims 1 to 3,
**characterized in that**
a heating cartridge is insertable or is inserted into the receptacle (14) as a heating arrangement.

7. Dosing device for additives according to one of Claims 1 to 6,
**characterized in that**
a temperature sensor is integrated or insertable in the receptacle (14).

8. Dosing device for additives according to one of the preceding claims,
**characterized in that**
a cartridge mounting is provided with a holding arrangement (17) to receive the cartridge (10).

9. Dosing device for additives according to one of the preceding claims,
**characterized in that**
an agitator is provided in the receptacle (14), which is able to be operated by a pneumatic drive, wherein the pneumatic drive is connected or connectable with the pressure supply arrangement.

10. Dosing device for additives according to one of the preceding claims,
**characterized in that**
a single connector is provided for the connection of all electrical systems, such as sensors, the cartridge (10).

11. Dosing device for additives according to one of the preceding claims,
**characterized in that**
at least one level switch (22) is provided.

12. Dosing device for additives according to one of the preceding claims,
**characterized in that**
the media lines have quick couplings, by means of which external devices are able to be connected with the cartridge (10).

## Revendications

1. Dispositif de nettoyage d'additifs conçu pour une installation de polyuréthane comprenant une cartouche remplaçable (10) et un module d'entraînement (12) pouvant être couplé à la cartouche (10), sachant que la cartouche (10) présente
- un récipient (14) pour l'additif,
-- un dispositif (16, 18, 20) pour alimenter le récipient (14) en air comprimé, lequel peut être raccordé à un dispositif d'alimentation en pression ainsi
-- qu'un dispositif de dosage à piston (26) qui est ou peut être mis en liaison d'écoulement avec le récipient (14) et qui est relié ou peut être relié à une buse de distribution (40),
**caractérisé en ce que**
le dispositif de dosage à piston (26) peut être couplé de manière séparable sans entraînement et avec le module d'entraînement et que le module d'entraînement est employé pour faire fonctionner le dispositif de dosage à piston.

2. Dispositif de nettoyage d'additifs selon la revendication 1,
**caractérisé en ce que**
le module d'entraînement est entraîné électriquement ou hydrauliquement.

3. Dispositif de nettoyage d'additifs selon la revendication 2,
**caractérisé en ce qu'**
avec un entraînement électrique, un moteur-couple est prévu et le moteur-couple est ainsi couplé à un engrenage que la rotation est convertie en un mouvement linéaire pour le piston du dispositif de dosage à piston.

4. Dispositif de nettoyage d'additifs selon l'une des revendications 1 à 3,
**caractérisé en ce que**
le récipient (14) est formé comme un récipient d'équilibrage de température à double paroi et peut être raccordé à un dispositif d'équilibrage de température.

5. Dispositif de nettoyage d'additifs selon l'une des revendications 1 à 3,
**caractérisé en ce que**
le récipient (14) est formé comme un récipient d'équilibrage de température à double paroi et qu'une unité d'équilibrage de température est reçue dans la cartouche et reliée au récipient pour son équilibrage de température.

6. Dispositif de nettoyage d'additifs selon l'une des revendications 1 à 3,
**caractérisé en ce qu'**
une cartouche chauffante peut être insérée ou est insérée comme dispositif chauffant dans le récipient (14).

7. Dispositif de nettoyage d'additifs selon l'une des revendications 1 à 6,
**caractérisé en ce qu'**
une sonde de température est intégrée ou peut être insérée dans le récipient (14).

8. Dispositif de nettoyage d'additifs selon l'une des revendications précédentes,
**caractérisé en ce qu'**
un logement de cartouche avec un dispositif de fixation (17) est prévu pour recevoir la cartouche (10).

9. Dispositif de nettoyage d'additifs selon l'une des revendications précédentes,
**caractérisé en ce que**
dans le récipient (14), un mélangeur est prévu qui peut fonctionner par un entraînement pneumatique, sachant que l'entraînement pneumatique est relié ou peut être relié au dispositif d'alimentation en pression.

10. Dispositif de nettoyage d'additifs selon l'une des revendications précédentes,
**caractérisé en ce que**
pour raccorder tous les systèmes électriques, comme les capteurs, de la cartouche (10), une prise unique est prévue.

11. Dispositif de nettoyage d'additifs selon l'une des revendications précédentes,
**caractérisé en ce qu'**
au moins un commutateur de niveau (22) est prévu.

12. Dispositif de nettoyage d'additifs selon l'une des revendications précédentes,
**caractérisé en ce que**
les conduites de fluide présentent des raccords rapides au moyen desquels des dispositifs externes peuvent être reliés à la cartouche (10).
